# EUROPEAN PATENT APPLICATION

(11) **EP 3 100 819 A1**
(43) Date of publication of application: **07.12.2016**
(21) Application number: 16172856.3
(22) Date of filing: 03.06.2016
(51) Int. Cl.: B23P 6/00, F01D 5/00, F01D 5/18, B23K 26/382

(54) **REPAIR OR REMANUFACTURE OF COOLED COMPONENTS WITH AN OXIDATION RESISTANT BRAZE**

(30) Priority: 03.06.2015 US 201514729426
(71) Applicant: United Technologies Corporation, Farmington, CT 06032 (US)
(72) Inventor: AUXIER, James, Bloomfield, CT Connecticut 06002 (US); CASTLE, Lea Kennard, Vernon, CT Connecticut 06066 (US)
(74) Representative: de Bresser, Sara Jean

(57) **Abstract**

A method of remanufacturing a component (20) including at least partially filling an internal passage architecture (30) of a component with a salt-based protective fill (120); filling at least one of a multiple of cooling holes (88) of the internal passage architecture subsequent to the at least partially filling the internal passage architecture of the component with the salt-based protective fill; and removing the salt-based protective fill subsequent to filling at least one of the multiple of cooling holes.

## Description

### BACKGROUND

The present disclosure relates generally to a remanufacturing process and, more particularly, to a repair process for air-cooled components.

Gas turbine engines, such as those that power modem commercial and military aircraft, generally include a compressor section to pressurize an airflow, a combustor section to burn a hydrocarbon fuel in the presence of the pressurized air, and a turbine section to extract energy from the resultant combustion gases.

Gas turbine engine hot section components such as blades and vanes are subject to high thermal loads for prolonged time periods. Other components also experience high thermal loads such as combustor, exhaust liner, blade outer air seals, and nozzle components. Historically, such components have implemented various air-cooling arrangements that permit the passage of air sourced from the compressor or fan section. In addition, the components are typically provided with various coatings such as thermal barrier coatings to further resist the thermal loads.

The internal passage architecture cavities may be produced through various processes such as investment cast, die cast, drill, EDM, milling, welding, additive manufacturing, etc. Oftentimes remanufacture, rework and/or repair processing requires an existing cavity to be filled or coated to absorb laser energy, provide protection from harsh chemicals such as acid etch, prevent cavity surfaces from being coating, and/or facilitate nondestructive testing techniques. Various remanufacture processes may require temperatures that may be near the alloy incipient melting point as well as steps that use reactive chemicals which may limit the choice of fill materials.

### SUMMARY

A method, e.g. a method for remanufacturing a component, according to one disclosed non-limiting embodiment of the present disclosure can include at least partially filling an internal passage architecture of a component with a salt-based protective fill. Preferably the component is an air-cooled component such as those described herein.

A further embodiment of the present disclosure may include removing at least a portion of a coating prior to the at least partially filling the internal passage architecture of the component with the salt-based protective fill.

A further embodiment of any of the embodiments of the present disclosure may include removing at least a portion of a top coat prior to at least partially filling the internal passage architecture of the component with the salt-based protective fill.

A further embodiment of any of the embodiments of the present disclosure may include removing at least a portion of a bond coat subsequent to the at least partially filling the internal passage architecture of the component with the salt-based protective fill.

A further embodiment of any of the embodiments of the present disclosure may include, wherein removing at least a portion of the coat (e.g. coating, top coat or bond coat) is performed with an acid.

A further embodiment of any of the embodiments of the present disclosure may include, wherein removing at least a portion of the coat (e.g. coating, top coat or bond coat) is performed with a hydrofluoric acid.

A further embodiment of any of the embodiments of the present disclosure may include filling at least one of a multiple of cooling holes of the internal passage architecture subsequent to the at least partially filling the internal passage architecture of the component with the salt-based protective fill.

A further embodiment of any of the embodiments of the present disclosure may include removing the salt-based protective fill from at least one of a multiple of cooling holes of the internal passage architecture subsequent to filling at least one of a multiple of cooling holes of the internal passage architecture.

A further embodiment of any of the embodiments of the present disclosure may include removing the salt-based protective fill from the at least one of a multiple of cooling holes of the internal passage architecture with a manual operation.

A further embodiment of any of the embodiments of the present disclosure may include filling the at least one of the multiple of cooling holes of the internal passage architecture with an Oxidation Resistant Braze (ORB).

A further embodiment of any of the embodiments of the present disclosure may include forming a cooling hole subsequent to the filling of the at least one of the multiple of cooling holes.

A method of remanufacturing a component according to another disclosed non-limiting embodiment of the present disclosure can include at least partially filling an internal passage architecture of a component with a salt-based protective fill; filling at least one of a multiple of cooling holes of the internal passage architecture subsequent to the at least partially filling the internal passage architecture of the component with the salt-based protective fill; and removing the salt-based protective fill (i.e. from said internal passage architecture and/or from said at least one of a multiple of cooling holes) subsequent to filling at least one of the multiple of cooling holes.

A further embodiment of any of the embodiments of the present disclosure may include removing the salt-based protective fill from at least one of a multiple of cooling holes of the internal passage architecture subsequent to at least partially filling the internal passage architecture of the component with the salt-based protective fill.

A further embodiment of any of the embodiments of the present disclosure may include removing at least a portion of a coat (e.g. coating, top coat or bond coat) subsequent to the at least partially filling the internal passage architecture of the component with the salt-based protective fill.

A further embodiment of any of the embodiments of the present disclosure may include, wherein removing at least a portion of the coat (e.g. coating, top coat or bond coat) is performed with a hydrofluoric acid.

A further embodiment of any of the embodiments of the present disclosure may include, wherein filling the at least one of a multiple of cooling holes of the internal passage architecture is performed with an Oxidation Resistant Braze (ORB).

A further embodiment of any of the embodiments of the present disclosure may include, wherein removing the salt-based protective fill subsequent to filling at least one of the multiple of cooling holes is performed with water.

A protective fill for remanufacturing a component having an internal passage architecture according to another disclosed non-limiting embodiment of the present disclosure can include a salt-based protective fill. Another embodiment includes use of a salt-based protective fill as herein described as a protective fill for remanufacturing a component having an internal passage architecture as herein described. Another embodiment includes a repaired or remanufactured component obtained by the methods described herein. Another embodiment includes a repaired or remanufactured component comprising a salt-based protective fill as herein described.

A further embodiment of any of the embodiments of the present disclosure may include, wherein the salt-based protective fill includes at least one of a magnesium sulfate and a tribasic potassium phosphate.

A further embodiment of any of the embodiments of the present disclosure may include, wherein the salt-based protective fill operates to protect features within the internal passage architecture such that the component remains capable of resisting a temperature within at least about 20 °F, e.g. within at least about 20 °F to 200 °F (i.e. within at least about 11.1 °C to 111.2 °C), of that from the component as newly manufactured.

The foregoing features and elements may be combined in various combinations without exclusivity, unless expressly indicated otherwise. These features and elements as well as the operation of the invention will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a general schematic view of an exemplary actively cooled component as a representative workpiece;
Figure 2 is an expanded cross section of the actively cooled component;
Figure 3 is a sectional view of a coating on the component;
Figure 4 is a flow diagram of a method of remanufacturing an actively cooled component according to another disclosed non-liming embodiment; and
Figure 5 is an expanded cross section of the actively cooled component representative of one step of the method of Figure 4.

### DETAILED DESCRIPTION

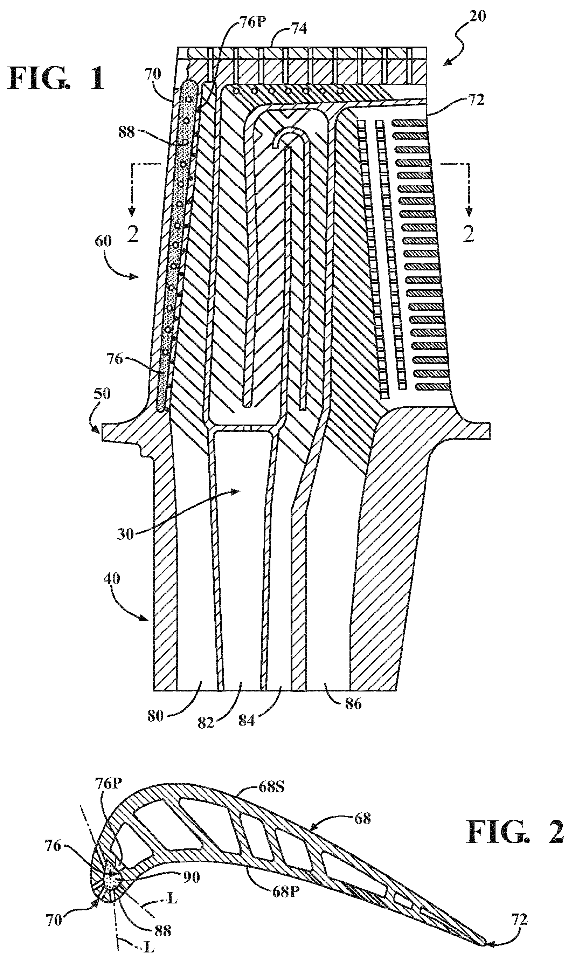

Figure 1 schematically illustrates a general perspective view of an exemplary component 20, e.g., an actively cooled turbine stator segment of a gas turbine engine. It should be appreciated that although a particular component type is illustrated in the disclosed non-limiting embodiment, other components, such as blades, vanes, exhaust duct liners, nozzle flaps nozzle seals as well as other actively cooled components will also benefit herefrom. These components operate in challenging high-temperature environments such as a hot section of a gas turbine engine and have aggressive requirements in terms of durability and temperature allowances.

The component 20 includes internal passage architecture 30. The internal passage architecture 30 that includes various passages, apertures and features. In this example, the component 20 may be a rotor blade that generally includes a root section 40, a platform section 50 and an airfoil section 60. Although the component 20 is illustrated as a rotor blade, various other components with passage architecture will also benefit herefrom such as BOAS, vane pockets and other such components. The airfoil section 60 defines is defined by an outer airfoil wall surface 68 between a leading edge 70 and a trailing edge 72. The outer airfoil wall surface 68 defines a generally concave shaped portion forming a pressure side 68P and a generally convex shaped portion forming a suction side 68S typically shaped for use in a respective stage of the high pressure turbine section.

The outer airfoil wall surface 68 extends spanwise from the platform section 50 to a tip 74 of the airfoil section 60. The trailing edge 72 is spaced chordwise from the leading edge 70. The airfoil has a plurality of cavities or passages for cooling air as represented by the leading edge passage 76 and passages 80, 82, 84, 86 which may extend through the root section 62. The passages extend into the interior of the airfoil section 60 and often extend in serpentine or other non-linear fashion. It should be appreciated that the passage arrangement is merely explanatory and that various passages may alternatively or additionally be provided.

A plurality of internal impingement holes, as represented by the hole 76P, connect the leading edge passage 76 in the leading edge region with the supply passage 78 to receive cooling air from the root section 40. It should be appreciated that the holes may be of various shapes. A plurality of film cooling holes adjacent the leading edge 70, as represented by the holes 88, may extend from the impingement passage 76 in the leading edge region through outer airfoil wall surface 68. The cooling holes 88, film or effusion, may be formed with, for example, lasers, Electron Discharge Machining (EDM), water jet, or other techniques and are typically approximately 0.014-0.125 inches (0.35-3.2mm) in diameter and may be drilled normal or angled to the surface.

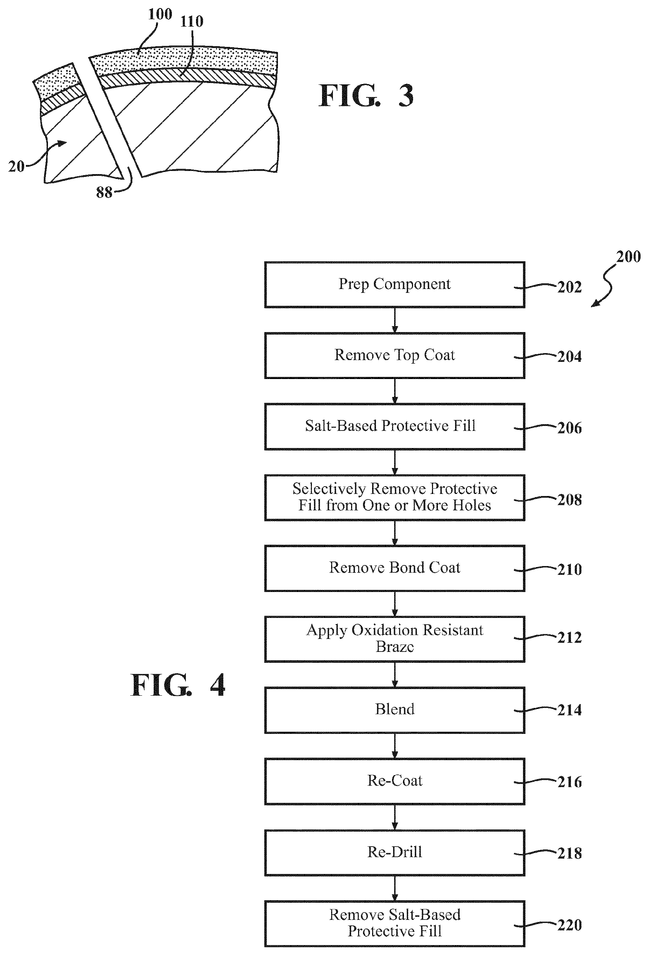

Flow path surfaces on the component 20 such as the airfoil section 60 and the associated surfaces of the platforms section 50 are coated to provide thermal barrier, environmental barrier and/or other capabilities required to survive in a high-temperature environment or other such requirements. The coating may be a thermal barrier coating that includes a bond coat 110 and a top coat 100 (Figure 3). The bond coat 110 in one disclosed non-limiting embodiment may be a nickel-based alloy material and the top coat 100 may be a ceramic material, each typically applied in layers via plasma spray coating system. The top coat 100 is typically thicker than the bond coat 110.

With reference to Figure 4, one disclosed non-limiting embodiment to restore the component 20 to near-original capability, a remanufacture method 200 initially includes preparation of the component 20 (step 202) such as by degreasing, fluoride-ion cleaning, grit blast, hydrogen furnace clean, vacuum clean and/or others. It should be appreciated that alternative or additional cleaning and preparation steps to facilitate the method may alternatively be performed.

Next, the top coat 100 may be removed (step 204). The removal or "strip" may be performed by a water jet, grit blast, potassium hydroxide, sodium hydroxide, or other process. The top coat 100 and a portion of the bond coat 110 may be removed. That is, the top coat 100 and the bond coat 110 are typically applied in sprayed layers such that all layers of the top coat 100 are removed and one or more of the layers of bond coat 110 may be removed in a area to be remanufactured. Alternatively, the entire top coat 100 is removed from the bond coat 110. Alternatively, still, the top coat 100 and the bond coat 110 may be removed.

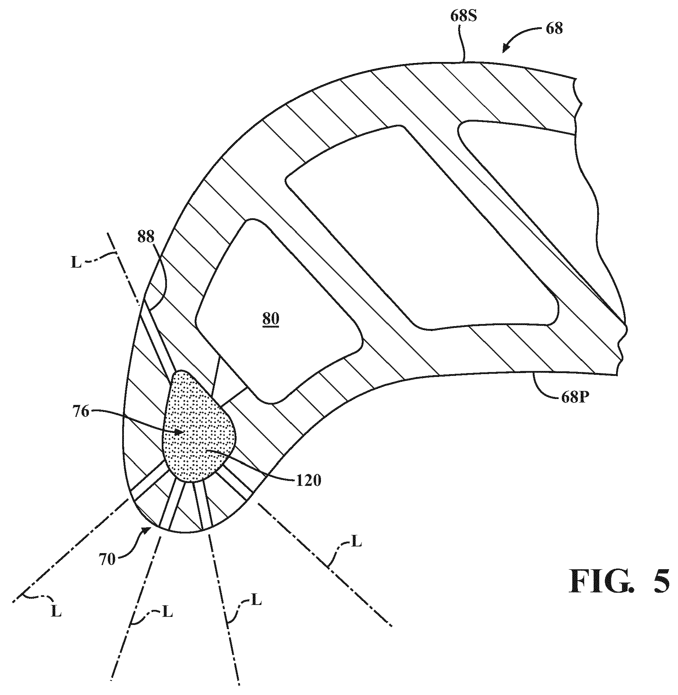

Next, a salt-based protective fill 120 is disposed in the internal passage architecture 30 (step 206; Figure 5). The salt-based protective fill 120 may be located in one or more passages such as the impingement passage 76 or selectively disposed in only those passages which communicate with the holes 88 that extend through the outer airfoil wall surface 68. In one embodiment, the salt-based protective fill 120 is a water soluble material composed of a salt such as magnesium sulfate, tribasic potassium phosphate, or other such salt-based composition. In one specific example, the salt-based protective fill 120 may be a mixture of about 50 mol % of Na2CO3, about 20 mol % ofNaCl, and about 30 mol % of KCl, for example, which may be typical of a salt core casting material that is often utilized in an investment casting technique using water soluble cores composed of salts in place of the ceramic cores traditionally used in airfoil casting for generating internal cavities

The salt-based protective fill 120 may be injected into the internal passage architecture 30 as a slurry substance which hardens when cured. The upper temperature limit of the salt-based protective fill 120 may be tuned by selection of the salt; for instance, magnesium sulfate will not melt until 2055F and tribasic potassium phosphate will not melt until 2516F. While these melting temperatures are below ceramics, they offer a distinct advantage of being highly water-soluble: 255 g/L for magnesium sulfate and 900 g/L for tribasic potassium phosphate at 25 deg. C (as a reference, NaCl is water soluble at 350 g/L at 25 deg. C). The water-soluble, high-temperature-capable salt-based protective fill 120 protects the internal passage architecture 30 during cooling hole repair, and facilitates a thermally and geometrically stable substrate for accurate braze repair of cooling holes.

Next, the cured salt-based protective fill 120 may be selectively removed from within the holes 88 (step 208). The removal may be performed manually with a pick or other tool. That is, one or more holes 88 that are incorrectly positioned or otherwise to be filled may be cleaned of the salt-based protective fill 120.

Next, the bond coat 110 is removed (step 210). A hydrofluoric acid, or other process may then be utilized to remove the bond coat 110. The component 20 is typically dipped into the hydrofluoric acid. As the salt-based protective fill 120 is disposed in the internal passage architecture 30, the salt-based protective fill 120 operates to protect the internal passage architecture 30 from the hydrofluoric acid. That is, the salt-based protective fill 120 operates to protect the bond coat 110 in the internal passage architecture 30.

Next, A nickel braze alloy composition such as an Oxidation Resistant Braze (ORB) composition is then applied to the component 20 over the holes 88 which are to be filled (step 212). An example of an Oxidation Resistant Braze (ORB) composition is available under the trademark TURBOFIX. The nickel braze alloy composition is compatible with the nickel based super alloy that forms the component 20 as, in one example, the component 20 is formed of a nickel based super alloy known by the industry specification as a PWA 1455 base alloy.

The nickel braze alloy composition, in one disclosed non-limiting embodiment, includes a combination of: base power alloy; alloy powder with a melting point depressant such as boron; and a braze binder such as an organic vehicle like cellulose. For example, the nickel braze alloy composition may include 50-80% base power alloy and 10% braze binder with the remainder as an alloy powder with a melting point depressant. Various other combinations and ingredients may alternatively be utilized. The water-soluble, high-temperature-capable salt-based protective fill 120 facilitates a thermally and geometrically stable substrate for accurate braze repair.

Next, the ORB may be blended into the substrate (Step 214).

Next, the component 20 is may be recoated as required to repair the thermal barrier coating (step 216). That is, the bond coat 110 and the top coat 100 are reapplied as required. The removed layer(s) of bond coat 110 may be reapplied if necessary to bring the thickness of the bond coat 110 to specification. The bond coat 110 is relatively thin and reapplication thereof minimally effects, if at all, the multiple of cooling holes 88. The component 20 may then be cleaned and prepped if required to receive the top coat 100. The salt-based protective fill 120, being high temperature resistant facilitates the prevention of "coat down" in which prior coated holes 88 are not undesirably reduced in diameter from their desired diameter in response to the recoating operation. That is, the salt-based protective fill 120 may maintained within the internal passage architecture 30 while the top coat 100 is applied.

Next, correctly positioned holes are drilled into the component 20 through the Oxidation Resistant Braze (ORB) (step 218). One process to form the holes is to laser drill each hole with a laser beam from the exterior of the outer airfoil wall surface 68. The salt-based protective fill 120 operates to protect the internal passage architecture 30 to attenuate the intensity of the laser beam. The salt-based protective fill 120 ensures that the laser beam does not inadvertently damage structure that faces the cooling air hole as the laser beam breaks through the outer airfoil wall surface 68 during the laser drilling process.

The salt-based protective fill 120 further facilitates the protection of features within the internal passage architecture 30 of a component such as a turbine blade that is tuned, in this example, to maintain the post-spall metal temperatures to be about around 2000 °F. The post-spall metal temperatures difference for which the component 20 remains capable of resisting as compared to a remanufacture for which the features may be compromised are dependent upon the type of cavity and, for example, are between about 20F-200F dependent upon the cavity configuration.

Finally, the salt-based protective fill 120 is removed (step 220). The salt-based protective fill 120 beneficially does not require harsh solvents to remove, which can damage or strip the underlying alloy and coating. In one example, an agitated water rinse is sufficient to remove the salt-based protective fill 120.

The salt-based protective fill 120 facilities the use of TURBOFIX which may have the undesirable potential of invading the core cavities and compromising the flow of cooling air. The salt-based protective fill 120 is also high-temperature capable, as opposed to silicone, polyfill, or any thermoplastics which a conventionally utilized only subsequent to TURBOFIX application.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments. Preferred embodiments are set out below:
1. A method, comprising:
   at least partially filling an internal passage architecture of a component with a salt-based protective fill.
2. The method as recited in embodiment 1, further comprising removing at least a portion of a coating prior to the at least partially filling the internal passage architecture of the component with the salt-based protective fill.
3. The method as recited in embodiment 1, further comprising removing at least a portion of a top coat prior to at least partially filling the internal passage architecture of the component with the salt-based protective fill.
4. The method as recited in embodiment 3, further comprising removing at least a portion of a bond coat subsequent to the at least partially filling the internal passage architecture of the component with the salt-based protective fill.
5. The method as recited in embodiment 4, wherein removing at least a portion of the bond coat is performed with an acid.
6. The method as recited in embodiment 4, wherein removing at least a portion of the bond coat is performed with a hydrofluoric acid.
7. The method as recited in embodiment 1, further comprising filling at least one of a multiple of cooling holes of the internal passage architecture subsequent to the at least partially filling the internal passage architecture of the component with the salt-based protective fill.
8. The method as recited in embodiment 7, further comprising removing the salt-based protective fill from at least one of a multiple of cooling holes of the internal passage architecture subsequent to filling at least one of a multiple of cooling holes of the internal passage architecture.
9. The method as recited in embodiment 8, further comprising removing the salt-based protective fill from the at least one of a multiple of cooling holes of the internal passage architecture with a manual operation.
10. The method as recited in embodiment 7, further comprising filling the at least one of the multiple of cooling holes of the internal passage architecture with an Oxidation Resistant Braze (ORB).
11. The method as recited in embodiment 7, further comprising forming a cooling hole subsequent to the filling of the at least one of the multiple of cooling holes.
12. A method of remanufacturing a component comprising:
   at least partially filling an internal passage architecture of a component with a salt-based protective fill;
   filling at least one of a multiple of cooling holes of the internal passage architecture subsequent to the at least partially filling the internal passage architecture of the component with the salt-based protective fill; and
   removing the salt-based protective fill subsequent to filling at least one of the multiple of cooling holes.
13. The method as recited in embodiment 12, further comprising removing the salt-based protective fill from at least one of a multiple of cooling holes of the internal passage architecture subsequent to at least partially filling the internal passage architecture of the component with the salt-based protective fill.
14. The method as recited in embodiment 12, further comprising removing at least a portion of a bond coat subsequent to the at least partially filling the internal passage architecture of the component with the salt-based protective fill.
15. The method as recited in embodiment 14, wherein removing at least a portion of the bond coat is performed with a hydrofluoric acid.
16. The method as recited in embodiment 12, wherein filling the at least one of a multiple of cooling holes of the internal passage architecture is performed with an Oxidation Resistant Braze (ORB).
17. The method as recited in embodiment 12, wherein removing the salt-based protective fill subsequent to filling at least one of the multiple of cooling holes is performed with water.
18. A protective fill for remanufacturing a component having an internal passage architecture comprising:
   a salt-based protective fill.
19. The repaired component as recited in embodiment 18, wherein the salt-based protective fill includes at least one of a magnesium sulfate and a tribasic potassium phosphate.
20. The repaired component as recited in embodiment 18, wherein the salt-based protective fill operates to protect features within the internal passage architecture such that the component remains capable of resisting a temperature within at least about 20 °F -200 °F of that from the component as newly manufactured.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be appreciated that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A method, e.g. a method for remanufacturing a component, comprising:
at least partially filling an internal passage architecture of a component with a salt-based protective fill.

2. The method as recited in claim 1, further comprising removing at least a portion of a coating prior to the at least partially filling the internal passage architecture of the component with the salt-based protective fill.

3. The method as recited in claim 1 or claim 2, further comprising removing at least a portion of a top coat prior to at least partially filling the internal passage architecture of the component with the salt-based protective fill.

4. The method as recited in any one of the preceding claims, further comprising removing at least a portion of a coat (e.g. bond coat) subsequent to the at least partially filling the internal passage architecture of the component with the salt-based protective fill, preferably
wherein removing at least a portion of the coat (e.g. bond coat) is performed with an acid, preferably a hydrofluoric acid.

5. The method as recited in in any one of the preceding claims, further comprising filling at least one of a multiple of cooling holes of the internal passage architecture subsequent to the at least partially filling the internal passage architecture of the component with the salt-based protective fill.

6. The method as recited in claim 5, further comprising removing the salt-based protective fill from at least one of a multiple of cooling holes of the internal passage architecture subsequent to filling at least one of a multiple of cooling holes of the internal passage architecture.

7. The method as recited in claim 5 or claim 6, further comprising removing the salt-based protective fill from the at least one of a multiple of cooling holes of the internal passage architecture with a manual operation.

8. The method as recited in any one of claims 5 to 7, further comprising filling the at least one of the multiple of cooling holes of the internal passage architecture with an Oxidation Resistant Braze (ORB).

9. The method as recited in any one of claims 5 to 8, further comprising forming a cooling hole subsequent to the filling of the at least one of the multiple of cooling holes.

10. The method as recited in any one of the preceding claims, comprising:
at least partially filling an internal passage architecture of a component with a salt-based protective fill;
filling at least one of a multiple of cooling holes of the internal passage architecture subsequent to the at least partially filling the internal passage architecture of the component with the salt-based protective fill; and
removing the salt-based protective fill subsequent to filling at least one of the multiple of cooling holes.

11. The method as recited in any one of the preceding claims, further comprising removing the salt-based protective fill from at least one of a multiple of cooling holes of the internal passage architecture subsequent to at least partially filling the internal passage architecture of the component with the salt-based protective fill.

12. The method as recited in any one of the preceding claims, wherein removing the salt-based protective fill subsequent to filling at least one of the multiple of cooling holes is performed with water.

13. A protective fill for remanufacturing a component having an internal passage architecture comprising:
a salt-based protective fill.

14. The protective fill as recited in claim 13, wherein the salt-based protective fill includes at least one of a magnesium sulfate and a tribasic potassium phosphate.

15. The protective fill as recited in claim 13 or claim 14, wherein the salt-based protective fill operates to protect features within the internal passage architecture such that the component remains capable of resisting a temperature within at least about 20 °F - 200 °F of that from the component as newly manufactured.
